# DEMANDE DE BREVET EUROPEEN

(11) **EP 2 946 911 A1**
(43) Date de publication de la demande: **25.11.2015**
(21) Numéro de dépôt: 15167602.0
(22) Date de dépôt: 13.05.2015
(51) Int. Cl.: B29C 70/50, B32B 27/12, B29C 70/08

(54) **SYSTÈME POUR FABRIQUER UN SEMI-PRODUIT EN MATIÈRE PLASTIQUE RENFORCÉE À HAUTE MASSE SURFACIQUE**

(30) Priorité: 19.05.2014 FR 1454454
(71) Demandeur: COMPAGNIE PLASTIC OMNIUM, 69007 Lyon (FR)
(72) Inventeur: PEYRE, Christophe, 26100 ROMANS-SUR-ISEREQ (FR)
(74) Mandataire: Remy, Vincent Noel Paul

(57) **Abrégé**

Système (1) pour fabriquer une feuille en matière plastique renforcée pour le moulage, comportant au moins un convoyeur (2) mobile selon une direction, un premier système d'apport (3) de matière plastique sur le convoyeur (2) positionné à l'extrémité amont du convoyeur (2), un premier moyen d'apport de fibre (4) permettant de déposer des fibres de renfort sur la matière plastique déposée sur le convoyeur (2) par le premier système d'apport (3) de matière plastique, le système comportant successivement de l'amont vers l'aval :
- au moins un second système d'apport (5) de matière plastique sur le convoyeur (2) positionné après le premier moyen d'apport de fibre (4) ;
- au moins un second moyen d'apport de fibre (6) ;
- au moins un troisième système d'apport (7) de matière plastique sur le convoyeur (2).

## Description

L'invention concerne le domaine technique des produits et semi-produits pour moulage de pièce en matière plastique renforcée. En particulier l'invention concerne un équipement pour fabriquer une feuille de matière plastique renforcée destinée au moulage de pièce.

Dans le domaine de l'automobile par exemple, de nombreuses pièces doivent allier résistance mécanique et faible poids.

Pour ce faire, il est connu de remplacer des pièces en acier par des pièces en matière plastique, thermodurcissable ou thermoplastique.

On connaît différents procédés de moulage de pièce en matière plastique, notamment :
- le procédé par compression (pour les matières thermodurcissables telle que le SMC) ;
- le procédé par thermoformage (compression avec une matière thermoplastique) ;
- le procédé par injection (pour les matières thermoplastiques) ;
- le procédé par transfert de résine (RTM).

Il est connu d'utiliser des matières plastiques renforcées (thermodurcissables ou thermoplastiques). Ces matières sont constituées d'éléments de renfort mélangés avec une résine polymère. Ces renforts sont généralement des fibres de verre ou de carbone par exemple. Ces fibres peuvent être coupées (bouts de fibre de longueur variable comprise entre 2 mm et 50 mm) ou, à l'inverse, continues.

On connaît par exemple les matières plastiques renforcées de type SMC (de l'anglais « *sheet moulding compound*/*composite »).*

Dans le cas le plus courant, une feuille de SMC est constituée de résine thermodurcissable (polyester par exemple) qui imprègne des éléments de renfort (fibre de verre par exemple). Elle peut également comporter des charges et/ou un catalyseur (durcisseur).

Une feuille de SMC est élaborée par imprégnation de fibres de renfort déposées, lors de la fabrication, en sandwich entre deux films de résine.

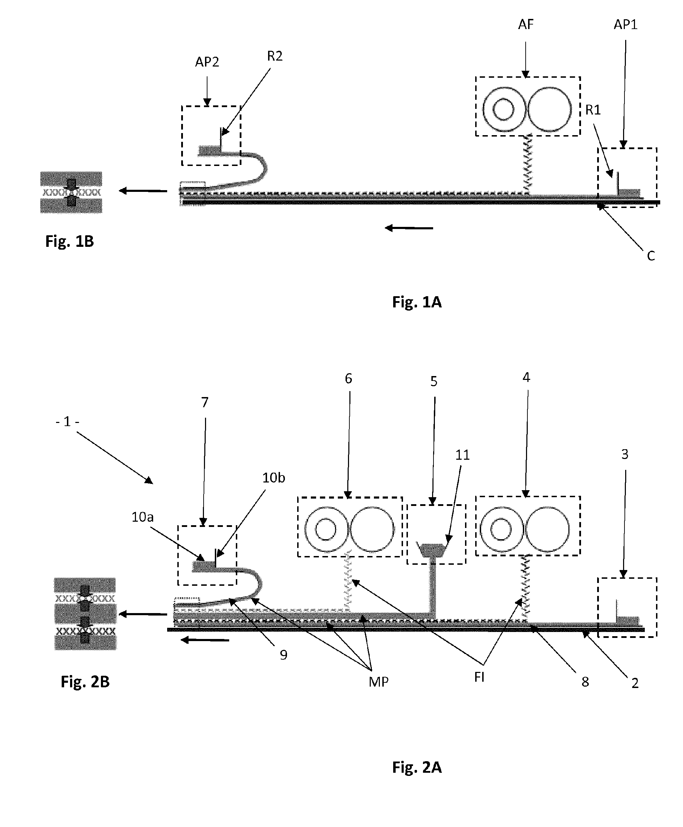

Un équipement connu pour fabriquer une feuille en matière plastique renforcée, de type SMC, est illustré sur la figure 1A. Un tel équipement comporte au moins un convoyeur (C), ou tapis, mobile selon une direction, puis successivement de l'amont vers l'aval selon le sens d'avance du convoyeur, différents postes de dépose :
- un premier moyen d'apport (AP1) de résine sur le convoyeur comportant une racle (R1) permettant d'assurer une épaisseur de résine sur le convoyeur, constante sur toute la largeur du convoyeur ;
- un moyen d'apport de fibres (AF), permettant de déposer des fibres de renfort sur la couche de résine;
- un second moyen d'apport (AP2) de résine par-dessus les fibres comportant une racle (R2) permettant d'assurer une épaisseur de résine sur le convoyeur constante sur toute la largeur du convoyeur.

Généralement, on utilise un film protecteur (par exemple de polyéthylène) pour les deux étapes de dépose de résine, de façon à ce que l'ensemble soit pris en sandwich par deux films protecteurs. Le premier moyen d'apport de résine dépose ainsi la résine sur un premier film protecteur évitant le contact entre le convoyeur et la résine, puis le second moyen d'apport de résine dépose la résine sur un second film protecteur recouvrant l'ensemble des couches déposées sur le convoyeur.

Grâce à cet équipement, il est possible de fabriquer des feuilles de SMC ayant une masse surfacique de l'ordre de 3 à 6kg/m², selon la formulation, la composition et/ou le grade de matière, c'est-à-dire selon le pourcentage et la nature des différents composants (résine, charge et renfort...) utilisés pour constituer ces feuilles.

Ces masses surfaciques s'avèrent trop faibles pour fabriquer, à partir d'une seule feuille, certaines pièces, notamment des pièces automobiles.

Pour réaliser de telles pièces, notamment des pièces structurelles, il est connu d'empiler plusieurs feuilles de SMC dans le moule.

Cependant, cette technique d'empilage, dite « plan de chargement », ralentit considérablement la production de pièces, du fait de cette étape de préparation et de chargement dans le moule. De plus, cette technique conduit à un emprisonnement d'air lors des phases de superposition des feuilles, dégradant ainsi la qualité et la solidité finale des pièces du fait de la présence de cloques, porosités différentes, ...

Il est donc préférable d'utiliser des feuilles de SMC ayant une masse surfacique plus élevée et avoir ainsi un nombre de couches de matériau à mettre en oeuvre dans le moule moins élevé, de préférence une seule couche.

Pour ce faire, on peut augmenter l'épaisseur de la couche de fibres de renfort au droit du moyen d'apport de fibres, en augmentant le débit par exemple, ou on peut multiplier le nombre de moyens d'apport de fibres entre les premier et second moyens d'apport de résine.

Ainsi, en déposant une couche épaisse de fibres de renfort (figure 1 B) on augmente la masse surfacique de la feuille de SMC.

Cependant, pour obtenir une feuille de matière plastique renforcée ayant des propriétés homogènes, il est nécessaire d'avoir une bonne imprégnation des fibres de renfort par la résine. La qualité de l'imprégnation est conditionnée par une bonne pénétration de la résine au travers de la couche de fibres de renfort. Or, avec la conception actuelle des machines et le niveau de viscosité de la résine, une épaisseur de couche de fibres de renfort trop importante, constitue une barrière de perméabilité pour la résine.

Ainsi, même avec un tel équipement, l'augmentation de la masse surfacique est limitée.

Le taux en masse moyen de fibres de renfort au m² (et également en épaisseur) est également une propriété importante de la feuille en matière plastique renforcée, car elle reflète l'homogénéité de la pièce et donc détermine la qualité mécanique de la pièce finie issue du moulage de la feuille.

Un autre paramètre important pour la production de pièce en matière plastique renforcée est la capacité d'imprégnation des fibres de renfort, dont la vitesse d'imprégnation est un paramètre. Plus l'on augmente le taux en masse moyen de fibres de renfort au m², plus l'imprégnation est freinée : pour conserver un même niveau de capacité d'imprégnation, il faut alors réduire la vitesse d'avancement du convoyeur ce qui dégrade la productivité globale de l'équipement.

Avec un équipement classique, on produit 10 mètres de feuille par minute pour un taux en masse moyen de fibres de renfort au m² de 25 à 30%.

Avec un taux en masse moyen de fibres de renfort au m² de 50%, on ne fabrique plus que 4 mètres de feuille par minute pour une même capacité d'imprégnation.

L'invention a pour but de remédier à ces inconvénients en fournissant un équipement pour fabriquer des feuilles de matières plastiques renforcées pouvant avoir une forte masse surfacique tout en ayant une parfaite imprégnation des fibres par la matière plastique (résine).

Ainsi, l'invention a pour objet un système pour fabriquer une feuille en matière plastique renforcée pour le moulage, comportant au moins un convoyeur mobile selon une direction, un premier système d'apport de matière plastique sur le convoyeur positionné à l'extrémité amont du convoyeur, un premier moyen d'apport de fibre permettant de déposer des fibres de renfort sur la matière plastique déposée sur le convoyeur par le premier système d'apport de matière plastique. Le système selon l'invention comporte successivement de l'amont vers l'aval :
- au moins un second système d'apport de matière plastique sur le convoyeur positionné après le premier moyen d'apport de fibre ;
- au moins un second moyen d'apport de fibre ;
- au moins un troisième système d'apport de matière plastique sur le convoyeur.

Ainsi, l'équipement selon l'invention comporte au moins trois systèmes d'apport de matière plastique, dont au moins un apport de matière est situé entre deux moyens de dépose de renforts sur le film protecteur, ce qui permet d'augmenter sensiblement les masses surfaciques des feuilles sans dégrader la qualité d'imprégnation : on peut ainsi envisager 60% en masse de fibres de renfort par exemple. Ceci permet de fabriquer des pièces ayant une meilleure performance mécanique, sans dégrader voire en améliorant la productivité.

De ce fait, grâce à l'équipement selon l'invention, il est possible de réaliser un moulage de pièce en insérant dans le moule un « plan de chargement » constitué d'une seule feuille de matière plastique renforcée (semi-produit) au lieu de deux ou trois avec les matériaux fabriqués sur les équipements antérieurs. De ce fait, on obtient un gain de productivité lors de l'étape de préparation du plan de chargement et éventuellement au chargement de la matière dans le moule. De plus, le fait d'utiliser une seule feuille pour une même masse surfacique permet d'éviter l'emprisonnement d'air lors des phases d'empilement des feuilles ; cet emprisonnement d'air engendre une réduction de la qualité de la pièce finie (cloques, porosités, ...).

De préférence, au moins un système d'apport de matière plastique peut être adapté à distribuer la matière plastique avec une épaisseur sensiblement constante sur toute la largeur du convoyeur.

De préférence, au moins un système d'apport de matière plastique peut être adapté à distribuer la matière plastique avec une épaisseur sensiblement constante sur toute la longueur du convoyeur.

Selon l'invention, au moins l'un des systèmes d'apport de matière plastique peut comporter :
- un moyen de distribution de matière sur le convoyeur, à débit homogène constant ;
- une racle permettant d'assurer une hauteur constante de matière plastique sur toute la largeur du convoyeur.

Selon un mode de réalisation, au moins un système d'apport de matière plastique comporte un moyen de distribution de matière plastique sur le convoyeur, le moyen de distribution ayant un débit homogène et constant, de façon à assurer une répartition homogène de la matière plastique sur toute la largueur du convoyeur.

Ce moyen de distribution peut comporter un organe d'amené de matière plastique au-dessus du convoyeur, ledit organe d'amené étant muni d'au moins une ouverture.

L'organe d'amené de matière plastique peut être positionné au-dessus du convoyeur et transversalement, de préférence perpendiculairement, à la direction d'avancement du convoyeur.

L'organe d'amené de matière plastique peut par exemple être un organe tubulaire ou un bac.

Selon l'invention, l'organe d'amené et l'ouverture sont de préférence dimensionnés de façon à contrôler le débit de la matière plastique arrivant sur le convoyeur.

On peut per exemple dimensionner au moins l'un des paramètres suivants : la taille de l'ouverture, la forme de l'ouverture, le nombre d'ouvertures, l'emplacement de l'ouverture.

L'organe d'amené et l'ouverture sont de préférence dimensionnés de façon à ce que la matière plastique s'écoule sur sensiblement toute la largeur du convoyeur.

Selon l'invention, le débit peut être contrôlé en réglant la vitesse d'écoulement de la matière plastique dans les ouvertures, par exemple, en inclinant plus ou moins l'organe d'amené.

Avantageusement, l'organe d'amené peut être couplé à un moyen de contrôle de la pression de la matière plastique.

L'organe d'amené peut comporter un système de réglage de la surface de l'ouverture.

Selon l'invention, le second système d'apport de matière plastique peut distribuer une matière plastique différente des autres systèmes d'apport de matière plastique.

L'invention concerne également un procédé de fabrication d'une feuille en matière plastique renforcée pour le moulage, dans lequel on déroule un convoyeur tout en réalisant les étapes suivantes :
a) on dépose une première couche de matière plastique sur le convoyeur ; puis
b) on dépose une première couche de fibres de renfort sur ladite première couche de matière plastique ; puis
c) on dépose une seconde couche de matière plastique sur la première couche de fibres de renfort ; puis
d) on dépose une seconde couche de fibres de renfort sur ladite seconde couche de matière plastique ; puis
e) on dépose une troisième couche de matière plastique sur la seconde couche de fibres de renfort.

L'invention concerne également une feuille en matière plastique renforcée pour le moulage, caractérisé en ce qu'elle comporte successivement une première couche de matière plastique, une première couche de fibre de renfort, une seconde couche de matière plastique, une seconde couche de fibre de renfort, et une troisième couche de matière plastique, et en ce que la masse surfacique de la feuille est supérieure à 3000 g/m2.

L'invention sera mieux comprise à la lecture des figures annexées, qui sont fournies à titre d'exemples et ne présentent aucun caractère limitatif, dans lesquelles :
La figure 1A illustre un équipement de l'art antérieur pour fabriquer des feuilles de matières plastiques renforcées de type SMC, avec une forte masse surfacique.
La figure 1B illustre l'empilement de matière obtenu au droit de la dernière distribution de matière plastique, avant imprégnation (et notamment avant « calandrage ») avec l'équipement de la figure 1A, et notamment l'épaisseur importante de la couche de fibre de renfort, frein à une bonne imprégnation des fibres.
La figure 2A illustre l'équipement selon l'invention pour fabriquer des feuilles de matières plastiques (résine) renforcées de type SMC, avec une forte masse surfacique.
La figure 2B illustre l'empilement de matière obtenu avec l'équipement selon l'invention, et notamment les faibles épaisseurs des couches de fibre de renfort, permettant une bonne imprégnation des fibres.
La figure 3 illustre un exemple de moyen de distribution (11) de matière plastique (MP) constitué d'un organe tubulaire dans lequel est alimentée la matière plastique et comportant une ligne de perforations par lesquelles s'écoule la matière plastique vers le convoyeur.
La figure 4 illustre un exemple de moyen de distribution (11) de matière plastique (MP) constitué d'un bac muni de perforations.
La figure 5 illustre un exemple de moyen de distribution (11) de matière plastique (MP) constitué d'un bac comportant une fente.
La figure 6 illustre une section vue de côté d'un exemple de moyen de distribution (11) de matière plastique (MP) constitué d'un bac incliné avec déversement.
La figure 7 illustre une section vue de côté d'un exemple de moyen de distribution (11) de matière plastique (MP) constitué d'un bac incliné comportant une fente en aval du bac, la fente ayant une ouverture réglable.
La figure 8(a) illustre l'empilement de matière obtenu avec un procédé classique, et les figures 8(b) à 8(d) illustrent différents empilements de matière obtenus avec l'équipement selon l'invention.

On se réfère maintenant à la figure 2A. Le système (1) selon l'invention, pour fabriquer une feuille en matière plastique renforcée pour le moulage, comporte au moins un convoyeur (2) mobile selon une direction, et successivement de l'amont vers l'aval (selon le sens de direction du convoyeur (2)) :
- un premier système d'apport (3) de matière plastique (MP) sur le convoyeur (2) positionné à l'extrémité amont du convoyeur (2) ;
- un premier moyen d'apport de fibre (4) permettant de déposer des fibres de renfort (FI) sur la matière plastique déposée sur le convoyeur (2) par le premier système d'apport (3) de matière plastique ;
- au moins un second système d'apport (5) de matière plastique sur le convoyeur (2) ;
- au moins un second moyen d'apport de fibre (6) ; et
- au moins un troisième système d'apport (7) de matière plastique sur le convoyeur (2).

Un système d'apport de matière plastique (3, 5, 7) selon l'invention est adapté à distribuer la matière plastique (MP) avec une épaisseur sensiblement constante sur toute la largeur du convoyeur (2).

De préférence, un système d'apport de matière plastique est adapté à distribuer la matière plastique avec une épaisseur sensiblement constante également sur toute la longueur du convoyeur.

De préférence, on utilise des films protecteurs (8, 9), en polyéthylène par exemple, pour les deux étapes de dépose de matière plastique (MP), de façon à ce que l'ensemble soit pris en sandwich par deux films protecteurs comme l'illustre la figure 2A. Le premier système d'apport (3) de matière plastique dépose ainsi la matière plastique sur un premier film protecteur (8) évitant le contact entre le convoyeur (2) et la matière plastique, puis le dernier système d'apport (7) de matière plastique dépose la matière plastique sur un second film protecteur (9) recouvrant l'ensemble des couches déposées sur le convoyeur (2).

Un système d'apport (3, 5, 7) de matière plastique peut comporter :
- un moyen de distribution (10a) de matière plastique (MP) sur le convoyeur (2) ou sur un film protecteur (8, 9).
- une racle (10b) permettant d'assurer une hauteur constante de matière plastique (MP) sur toute la largeur et la longueur du convoyeur (2). La racle peut être positionnée juste en sortie du moyen de distribution (10a) de matière plastique (MP), ou alors juste avant un moyen d'apport de fibre.

Un système d'apport (3, 5, 7) de matière plastique peut également comporter un moyen de distribution (11) de matière plastique (MP) sur le convoyeur (2), le moyen de distribution (11) ayant un débit homogène et constant, de façon à assurer une répartition homogène de la matière plastique sur toute la largeur du convoyeur (2).

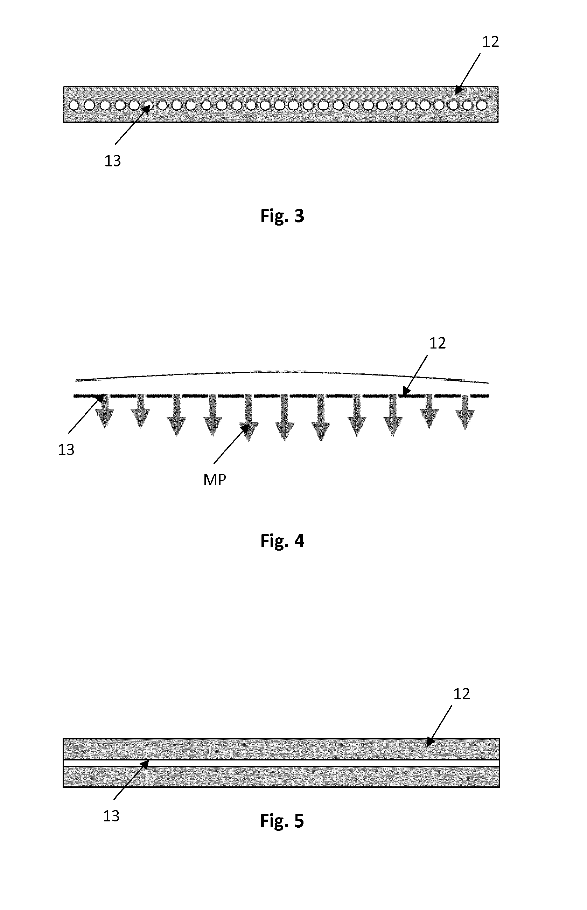

Le moyen de distribution (11) de matière plastique comporte un organe d'amené (12) de matière plastique au-dessus du convoyeur (2). Il peut s'agir d'un organe tubulaire (figure 3) ou d'un bac (figures 4 à 7). L'organe (12) est placé au-dessus du convoyeur (2) et transversalement, de préférence perpendiculairement, à la direction d'avancement du convoyeur (2).

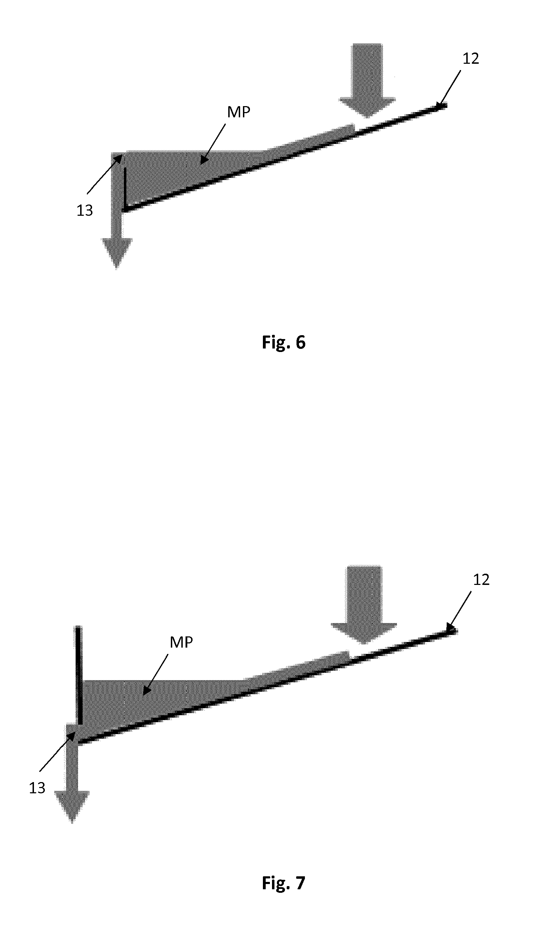

Pour permettre de déverser la matière plastique sur le convoyeur (2), l'organe d'amené (12) est muni d'au moins une ouverture (13) s'ouvrant directement (sous l'organe (12), figure 3) ou indirectement (sur le côté de l'organe (12), figure 7) sur le convoyeur (2). Ces ouvertures (13) peuvent avoir des formes variées : trous sensiblement circulaires, fentes, ...

Ainsi, grâce à la position de l'organe (12) et à ses ouvertures (13), la matière plastique (MP) arrivant dans l'organe (12) s'écoule sur le convoyeur (2) à travers les ouvertures (13).

De préférence, l'organe d'amené (12) et ses ouvertures (13) sont dimensionnés de façon à ce que la matière plastique s'écoule sur sensiblement toute la largeur du convoyeur (2).

Pour obtenir une masse surfacique donnée, il faut pouvoir contrôler le débit de matière plastique déposée Il est également possible de régler la vitesse du convoyeur (2) en fonction du débit. Mais généralement, pour des raisons de cadence industrielle, la vitesse d'avancement du convoyeur (2) est fixée, et le débit de matière plastique est adapté.

Pour contrôler le débit de la matière plastique arrivant sur le convoyeur (2), on peut utiliser un dispositif passif :
- Le débit peut être contrôlé en réglant les paramètres suivants en fonction de la masse surfacique souhaitée :
   o La taille de l'ouverture (13) : plus l'ouverture est grande plus le débit est important.
   o La forme de l'ouverture (13) permet également un contrôle du débit. En effet, à surface égale, un orifice circulaire ou une fente n'offriront pas les mêmes débits.
   o Le nombre d'ouvertures (13). En effet ce facteur combine les deux facteurs précédents : plus il y a d'ouvertures, plus le débit est important.
   o L'emplacement de l'ouverture (13) et/ou la répartition des ouvertures (13).
- Le débit peut être contrôlé en réglant la vitesse d'écoulement de la matière plastique dans les ouvertures (13), par exemple, en inclinant plus ou moins l'organe d'amené (12). Ce mode de réalisation est illustré par les exemples des figures 6 et 7.

Pour contrôler le débit de la matière plastique arrivant sur le convoyeur (2), on peut utiliser un dispositif actif en complément ou non d'un dispositif passif :
- l'organe d'amené (12) peut être couplé à un moyen de contrôle de la pression (notamment dans le cas d'un organe de type tubulaire comme illustré sur la figure 1) pour que la matière plastique arrive dans l'organe (12) sous pression contrôlée, de façon à contrôler finement le débit d'écoulement.
- l'organe d'amené (12) peut comporter un système de réglage de la surface de l'ouverture (13).

De plus, grâce à ce système, il est possible de contrôler le débit ouverture par ouverture, et ainsi constituer un profil de masse surfacique variable en épaisseur sur la largeur du convoyeur (2). Ce système a également l'avantage de pouvoir s'adapter au type de matière plastique, sans modifier l'organe d'amené. En effet, si une matière plastique plus fluide est utilisée, il suffira de réduire les ouvertures, pour préserver une homogénéité du débit.

### Exemples de réalisations

**Selon un premier exemple de réalisation** (figure 3), le moyen de distribution (11) de matière plastique comporte un organe tubulaire (12) dont la longueur est sensiblement égale à la largeur du convoyeur (2). Cet organe (12) comporte un ensemble de perforations (13), par exemple disposées en ligne. Chaque perforation (13) s'ouvre vers le convoyeur (2). L'organe (12) est placé transversalement, de préférence perpendiculairement, à la direction d'avancement du convoyeur (2). La matière plastique (MP) s'écoule ainsi dans le tube (12), puis s'écoule sur le convoyeur (2) avec un débit contrôlé sur sensiblement toute la largeur du support, en passant par les perforations (13). De préférence, cet organe (12) est couplé à un moyen de contrôle de la pression de façon à contrôler finement le débit.

**Selon un second exemple de réalisation** (figure 4 et 5), le moyen de distribution (11) de matière plastique comporte un bac (12) comportant au moins une ouverture (13) : un ensemble de perforations (13), tous les 1 cm par exemple, formant une ligne ou une fente. Cette ligne de perforation ou cette fente s'ouvre vers le convoyeur (2), et le bac (12) est placé transversalement, de préférence perpendiculairement, à la direction d'avancement du convoyeur (2). La matière plastique s'écoule ainsi sur le convoyeur (2), en passant par les perforations (13) ou la fente (13).

**Selon un troisième exemple de réalisation** (figure 6), le moyen de distribution (11) de matière plastique comporte un bac (12) incliné avec déversement. La largeur du bac est égale à la largeur du convoyeur. Le système de déversement permet de contrôler finement le débit de matière s'écoulant sur le convoyeur (2). Selon ce système, l'ouverture (13) est constituée par la face ouverte du bac.

**Selon un quatrième exemple de réalisation** (figure 7), le moyen de distribution (11) de matière plastique comporte un bac (12) incliné comportant une fente (13) en aval du bac, de façon à ce que la matière plastique s'écoule du haut vers le bas, en direction de la fente (13). L'ouverture de la fente (13) est réglable, de façon à contrôler le débit. La largeur du bac (12) est sensiblement égale à la largeur du convoyeur (2).

Selon l'invention, le système peut comporter toute combinaison de systèmes d'apport (3, 5, 7) de matière plastique.

Par exemple, et de façon préférentielle, les systèmes d'apport placés aux extrémités du convoyeur (2), c'est-à-dire les systèmes d'apport 3 et 7, comportent un moyen (8) de distribution de matière plastique (MP) et une racle (9), alors que le système d'apport central, le système d'apport 5, comporte un moyen de distribution (10) ayant un débit homogène et constant.

**Selon un autre mode de réalisation,** l'un quelconque des systèmes d'apport (5) de matière plastique, distribue une matière plastique différente des autres systèmes d'apport de matière plastique. De cette façon, il est possible de donner une fonction particulière une partie de la matière plastique (résine), de préférence dans le coeur de la feuille. Par exemple, le second système d'apport (5) de matière plastique est adapté pour distribuer une matière plastique allégée, et/ou une matière plastique de faible coût.

**L'invention concerne également un procédé de fabrication d'une feuille en** matière plastique renforcée pour le moulage, dans lequel on déroule un convoyeur tout en réalisant les étapes suivantes :
a) on dépose une première couche de matière plastique sur le convoyeur ; puis
b) on dépose une première couche de fibres de renfort sur ladite première couche de matière plastique ; puis
c) on dépose une seconde couche de matière plastique sur la première couche de fibres de renfort ; puis
d) on dépose une seconde couche de fibres de renfort sur ladite seconde couche de matière plastique ; puis
e) on dépose une troisième couche de matière plastique sur la seconde couche de fibres de renfort.

**L'invention concerne également une feuille en matière plastique** renforcée pour le moulage, comportant successivement une première couche de matière plastique, une première couche de fibre de renfort, une seconde couche de matière plastique, une seconde couche de fibre de renfort, et une troisième couche de matière plastique, et en ce que la masse surfacique de la feuille est supérieure à 3000g/m², et de préférence supérieure à 6000g/m².

### Avantages

L'équipement selon l'invention permet de fabriquer des feuilles de matières plastiques renforcées pouvant avoir une forte masse surfacique tout en ayant une parfaite imprégnation des fibres par la matière plastique (résine).

L'équipement selon l'invention permet également de fabriquer des feuilles de matières plastiques renforcées pouvant avoir un fort taux en masse de renfort, supérieure à 40% en masse, de préférence supérieure à 50%, et encore préférentiellement supérieure à 60%, tout en ayant une parfaite imprégnation des fibres par la matière plastique.

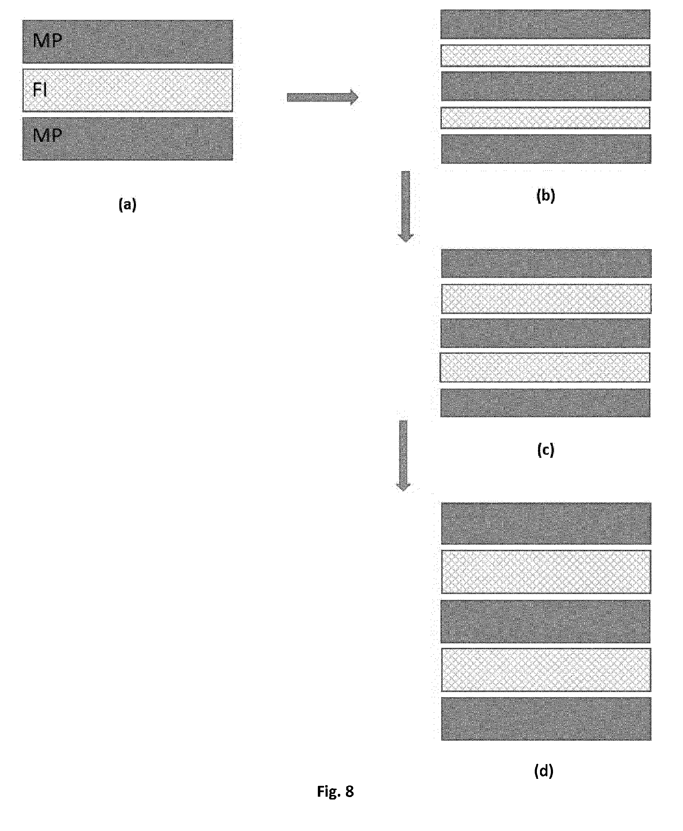

En effet, grâce à l'équipement selon l'invention, il est possible :
- d'augmenter le taux en masse de renfort pour une masse surfacique donnée et une capacité, notamment une vitesse d'imprégnation donnée (figure 8(c) comparativement à la figure 8(b)) ;
- d'augmenter la capacité d'imprégnation pour un taux en masse de renfort donné et une masse surfacique donnée (figure 8(b) comparativement à la figure 8(a)) ;
- d'augmenter la masse surfacique pour un taux en masse de renfort donné et une capacité d'imprégnation donnée (figure 8(d) comparativement à la figure 8(a)).

Par exemple, si avec un équipement classique on réalise une feuille de matière plastique renforcée ayant un taux en masse moyen de fibres de renfort au m² de 50%, une masse surfacique de 3kg/ m² avec une vitesse de 4m/min, alors grâce à l'invention on peut :
- Produire une feuille de matière plastique renforcée avec une même vitesse (4m/min), une même masse surfacique de (3kg/ m²) mais avec taux en masse moyen de fibres de renfort au m² de 60%.
- Produire une feuille de matière plastique renforcée avec une même vitesse (4m/min), un même taux en masse moyen de fibres de renfort au m² (50%), mais avec une masse surfacique de 4kg/ m².
- Produire une feuille de matière plastique renforcée avec un même taux en masse moyen de fibres de renfort au m² (50%), une même masse surfacique de (3kg/ m²) mais avec une vitesse plus importante.

La figure 8 illustre ces différentes possibilités :
- La figure 8(a) représente un empilement obtenu avec un dispositif classique dans lequel une couche de fibres de renfort (FI) est prise en sandwich entre deux couches de matière plastique (MP).
- La figure 8(b) représente un empilement obtenu avec le système selon l'invention, dans lequel les proportions de fibre de renfort (FI) et de matière plastique (MP) sont les mêmes que pour la figure 8(a), et l'épaisseur de l'empilement est la même (donc la masse surfacique est identique). En revanche, la couche unique de fibre de renfort a été divisée en deux couches plus fines, favorisant l'imprégnation des fibres de renfort : la capacité d'imprégnation est augmentée.
- La figure 8(c) représente un empilement obtenu avec le système selon l'invention, dans lequel la proportion de fibre de renfort (FI) est plus importante que pour la figure 8(b), mais la masse surfacique est identique.
- La figure 8(d) représente un empilement obtenu avec le système selon l'invention, dans lequel les proportions de fibre de renfort (FI) et de matière plastique (MP) sont les mêmes que pour la figure 8(c), mais la masse surfacique est plus élevée (épaisseur de l'empilement supérieure).

## Revendications

1. Système (1) pour fabriquer une feuille en matière plastique renforcée pour le moulage, comportant au moins un convoyeur (2) mobile selon une direction, un premier système d'apport (3) de matière plastique sur le convoyeur (2) positionné à l'extrémité amont du convoyeur (2), un premier moyen d'apport de fibre (4) permettant de déposer des fibres de renfort sur la matière plastique déposée sur le convoyeur (2) par le premier système d'apport (3) de matière plastique, caractérisé en qu'il comporte successivement de l'amont vers l'aval :
- au moins un second système d'apport (5) de matière plastique sur le convoyeur (2) positionné après le premier moyen d'apport de fibre (4) ;
- au moins un second moyen d'apport de fibre (6) ;
- au moins un troisième système d'apport (7) de matière plastique sur le convoyeur (2).

2. Système selon la revendication 1, dans lequel au moins un système d'apport de matière plastique (3, 5, 7) est adapté à distribuer la matière plastique avec une épaisseur sensiblement constante sur toute la largeur du convoyeur (2).

3. Système selon l'une des revendications précédentes, dans lequel au moins un système d'apport de matière plastique (3, 5, 7) est adapté à distribuer la matière plastique avec une épaisseur sensiblement constante sur toute la longueur du convoyeur (2).

4. Système selon l'une des revendications 1 à 3, dans lequel au moins l'un des systèmes d'apport de matière plastique (3, 5, 7) comporte :
- un moyen de distribution de matière sur le convoyeur (2), à débit homogène constant ;
- une racle permettant d'assurer une hauteur constante de matière plastique sur toute la largeur du convoyeur (2).

5. Système selon l'une des revendications précédentes, dans lequel au moins un système d'apport de matière plastique comporte un moyen de distribution (11) de matière plastique (MP) sur le convoyeur (2), le moyen de distribution (11) ayant un débit homogène et constant, de façon à assurer une répartition homogène de la matière plastique sur toute la largueur du convoyeur (2).

6. Système selon la revendication 5, dans lequel le moyen de distribution (11) comporte un organe d'amené (12) de matière plastique au-dessus du convoyeur (2), ledit organe d'amené (12) étant muni d'au moins une ouverture (13).

7. Système selon la revendication 6, dans lequel l'organe d'amené (12) de matière plastique est positionné au-dessus du convoyeur (2) et transversalement, de préférence perpendiculairement, à la direction d'avancement du convoyeur (2).

8. Système selon l'une des revendications 6 et 7, dans lequel l'organe d'amené (12) de matière plastique est un organe tubulaire ou un bac.

9. Système selon l'une des revendications 6 à 8, dans lequel l'organe d'amené (12) et l'ouverture (13) sont dimensionnés de façon à contrôler le débit de la matière plastique arrivant sur le convoyeur (2).

10. Système selon la revendication 9, dans lequel on dimensionne au moins l'un des paramètres suivants : la taille de l'ouverture (13), la forme de l'ouverture (13), le nombre d'ouvertures (13), l'emplacement de l'ouverture (13).

11. Système selon l'une des revendications 6 à 10, dans lequel l'organe d'amené (12) et l'ouverture (13) sont dimensionnés de façon à ce que la matière plastique s'écoule sur sensiblement toute la largeur du convoyeur (2).

12. Système selon l'une des revendications 6 à 11, dans lequel le débit est contrôlé en réglant la vitesse d'écoulement de la matière plastique dans les ouvertures (13).

13. Système selon l'une des revendications 6 à 12, dans lequel l'organe d'amené (12) est couplé à un moyen de contrôle de la pression de la matière plastique.

14. Système selon l'une des revendications 6 à 13, dans lequel l'organe d'amené (12) comporte un système de réglage de la surface de l'ouverture (13).

15. Système selon l'une des revendications précédentes, dans lequel le second système d'apport de matière plastique distribue une matière plastique différente des autres systèmes d'apport de matière plastique.

16. **Procédé de fabrication d'une feuille** en matière plastique renforcée pour le moulage, **caractérisé en ce que** l'on déroule un convoyeur tout en réalisant les étapes suivantes :
a) on dépose une première couche de matière plastique sur le convoyeur ; puis
b) on dépose une première couche de fibres de renfort sur ladite première couche de matière plastique ; puis
c) on dépose une seconde couche de matière plastique sur la première couche de fibres de renfort ; puis
d) on dépose une seconde couche de fibres de renfort sur ladite seconde couche de matière plastique ; puis
e) on dépose une troisième couche de matière plastique sur la seconde couche de fibres de renfort.

17. **Feuille en matière plastique** renforcée pour le moulage, **caractérisé en ce qu'**elle comporte successivement une première couche de matière plastique, une première couche de fibre de renfort, une seconde couche de matière plastique, une seconde couche de fibre de renfort, et une troisième couche de matière plastique, et **en ce que** la masse surfacique de la feuille est supérieure à 3000 g/m².
